# EUROPEAN PATENT APPLICATION

(11) **EP 3 872 983 A1**
(43) Date of publication of application: **01.09.2021**
(21) Application number: 20159999.0
(22) Date of filing: 28.02.2020
(51) Int. Cl.: H02P 29/02, G05D 1/00

(54) **REDUNDANCY CONCEPT FOR THE CONTROL OF MULTI-LANE ELECTRICAL POWERTRAIN**

(71) Applicant: Siemens Aktiengesellschaft, 80333 München (DE)
(72) Inventor: Birkmayer, Wolfram Siegfried, 91341 Röttenbach (DE)

(57) **Abstract**

The invention specifies a system for controlling a multi-lane electrical powertrain, comprising:
- a control unit (C1, C2, C3) for each lane (L1, L2, L3),
- at least one lane-specific sensor signal (SL1, SL2, SL3) for each lane (L1, L2, L3),
- wherein all lane-specific sensor signals (SL1, SL2, SL3) are in electrical communication with all control units (C1, C2, C3) and
- wherein each control unit (C1, C2, C3) is configured to generate lane-specific controller output signals (LS1.1, LS1.2, LS1.3, LS2.1, LS2.2, LS2.3, LS3.1, LS3.2, LS3.3) for each lane (L1, L2, L3) based on the respective lane-specific sensor signals (SL1, SL2, SL3).as well.

Furthermore, the invention specifies a related method for controlling a multi-lane electrical powertrain.

## Description

### FIELD OF THE INVENTION

The present invention relates to a system for controlling a multi-lane electrical power train, which comprises a control unit for each lane and at least one lane-specific sensor signal for each lane. Furthermore, the invention relates to a related method for controlling a multi-lane electrical power train.

### BACKGROUND OF THE INVENTION

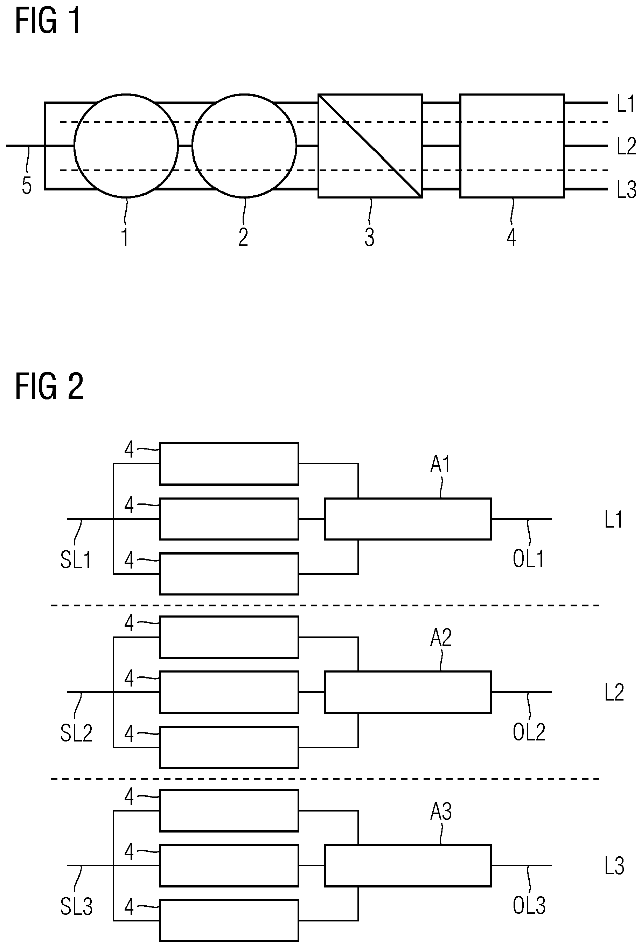

Especially in the field of avionics the concept of redundancy is often a prerequisite. Therefore, using electrical machines (drives and generators) redundancy plays a major role, as well. The concept of the invention can be applied to any multi-lane application of electrical power trains. As an example, a geared motor drive is shown in FIG. 1 and described hereafter.

In a multi-lane application, here illustrated for a three-lane L1, L2 and L3 geared drive, the gear 1, the electrical motor 2, the power inverter 3 and the control unit 4 are split into three independent parts that each contribute to the output, here the mechanical output power of the mechanical shaft 5.

To increase the reliability of power inverters, redundant controllers or control units are used. In case one fails, the redundant unit or one of the redundant controllers takes over.

To implement a standard controller in the state-of-the-art, for each lane a single control unit is used. To implement a controller with higher reliability in the state-of-the-art for each lane the control unit is made redundant.

In FIG. 2 a block diagram of an example for redundancy is shown. Each of the lanes L1, L2, and L3 comprises three control units 4 and one output unit A1, A2 or A3. Therefore, the first sensor signal SL1 is fed to three parallel working control units 4 of the first lane L1. Each control unit output of the three control units 4 of the first lane L1 is fed into the first output unit A1, which can be a switching circuit or a voter circuit, and which is responsible for an agreed first output signal OL1 of the first lane L1.

The second sensor signal SL2 is fed to three parallel working control units 4 of the second lane L2. Each control unit output of the three control units 4 of the second lane L2 is fed into the second output unit A2, which can be a switching circuit or voter circuit, and which is responsible for an agreed second output signal OL2 of the second lane L2.

Furthermore, the third sensor signal SL3 is fed to three parallel working control units 4 of the third lane L3. Each control unit output of the three control units 4 of the third lane L3 is fed into the third output decision unit A3, which can be a switching circuit or a voter circuit, and which is responsible for an agreed third output signal OL3 of the third lane L3.

For reasons of dissimilarity the control units 4 of each lane, respectively L1, L2 and L3, can be implemented with different technology and with a different software to improve the reliability further. In the state-of-the-art example of FIG. 2 each lane L1, L2, L3 requires three control units 4. If implemented with three lanes a total of nine control units 4 are required.

The patent publication US 9.705,442 B2 discloses multi-lane motor drives and drive systems. The motor drive is an asymmetrical multi-phase motor drive. The motor drive includes a master lane and a slave lane having fewer phases than the master lane has. Each lane can be powered by a single direct current link.

An example for controller redundancy is described in the patent application US 2011/0204857 A1. It discloses a system with a primary and secondary controller along with a power electronic circuitry module. The primary controller is in electrical communication with the power electronic circuitry module through a primary high-speed serial link (HSSL). The secondary controller is in electrical communication with the power electronic circuitry module through a secondary HSSL

### SUMMARY OF THE INVNETION

The objective of the present invention is to provide a solution for redundant control units in a multi-lane electrical machine environment which is highly reliable and cost-efficient.

According to the invention the objective is accomplished by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims or may be learned by the practice of the disclosed concepts as set forth herein.

In the invention the redundancy is achieved with only three controllers instead of nine according to the state of the art according to FIG. 2. In the state of the art each lane completes the control function only for its own purpose. According to the invention the control unit of each lane completes the role of one controller of the lane, however, the controller also completes the redundant control function of the other lanes.

The advantages of the claimed architecture concept of the invention is the need of fewer processors to achieve the same purpose. Today the processors are extremely powerful, even oversized for many applications. This means that with this invention this spare capacity is used.

Rearranging the controller functions of each lane, also to other lanes liberates control units. The rearrangement allows still to use dissimilar technologies and software, which are important aspect for reliability and safety. There can be large cost savings, by reducing the number or required controllers/processors.

The invention claims a system for controlling a multi-lane electrical powertrain, comprising:
- a control unit for each lane,
- at least one lane-specific sensor signal for each lane,
- wherein all lane-specific sensor signals are in electrical communication with all control units and
- wherein each control unit is configured to generate lane-specific controller output signals for each lane based on the respective lane-specific sensor signals.

Electrical powertrain in the context of this invention includes both electrical propulsion and electrical generation.

In a further embodiment the system comprises:
- one output unit for each lane, wherein respective lane-specific controller output signals are electrically communicating with the lane-specific output unit, and
- wherein each output unit is configured to determine a lane-specific common output signal based on the respective lane-specific controller output signals.

In a further embodiment of the system the determination is performed by majority voting or mutual agreement.

In a further embodiment of the system the output unit is a voter circuit or a switch circuit.

A voter circuit is part of a redundancy based fault tolerant system that enables a system to continue operating properly in the event of one or more faults within its components.

In a further embodiment the system, comprises:
- a power inverter for each lane,
- wherein the inverter is at least partly controlled by the common output signals and
- wherein the sensor signals are partly generated by the power inverter.

A power inverter is a device that converts direct current to alternating current.

In a further embodiment the system comprises:
- an electrical machine, which is electrically connected with the power inverter,
- wherein the sensor signals are partly generated by the electrical machine.

In a further embodiment of the system the electrical machine is a multi-lane multi-phase electrical motor.

Furthermore, the invention claims a method for controlling a multi-lane electrical powertrain, wherein:
- lane-specific sensor signals are electrically communicating with lane-specific control units and
- lane-specific controller output signals are generated by each control unit for each lane based on the respective lane-specific sensor signals.

In a further embodiment of the method:
- respective lane-specific controller output signals are electrically communicating with lane-specific output units, and
- a lane-specific common output signal is determined by each output unit based on the respective lane-specific controller output signals.

In a further embodiment of the method the determination is performed by majority voting or mutual agreement.

In a further embodiment of the method:
- a lane-specific power inverter is at least partly controlled by the common output signals and
- the sensor signals are partly generated by the power inverter.

In a further embodiment of the method:
- an electrical machine is electrically connected with the power inverter and
- the sensor signals are partly generated by the electrical machine.

Further benefits and advantages of the present invention will become apparent after a careful reading of the detailed description with appropriate reference to the accompanying drawings.

### BRIEF DESCROPTION OF THE DRAWINGS

- FIG. 1: illustrates a block diagram of an electrical motor drive train according to the state of the art,
- FIG. 2: illustrates a block diagram of a redundant controller arrangement for an electrical power train according to the state of the art,
- FIG. 3: illustrates a circuit diagram of an inverter with a control unit according to the state of the art and
- FIG. 4: illustrates a block diagram of a redundant controller arrangement for an electrical powertrain according to the invention.

### DETAILED DESCRIPTION OF THE INVENTION

Various embodiments of the disclosed method and system are discussed in detail below. While specific implementations are discussed it should be understood this is done for illustration purposes only. A person skilled in the relevant art will recognize that other components, configurations and steps may be used without parting from the spirit and scope of the disclosure.

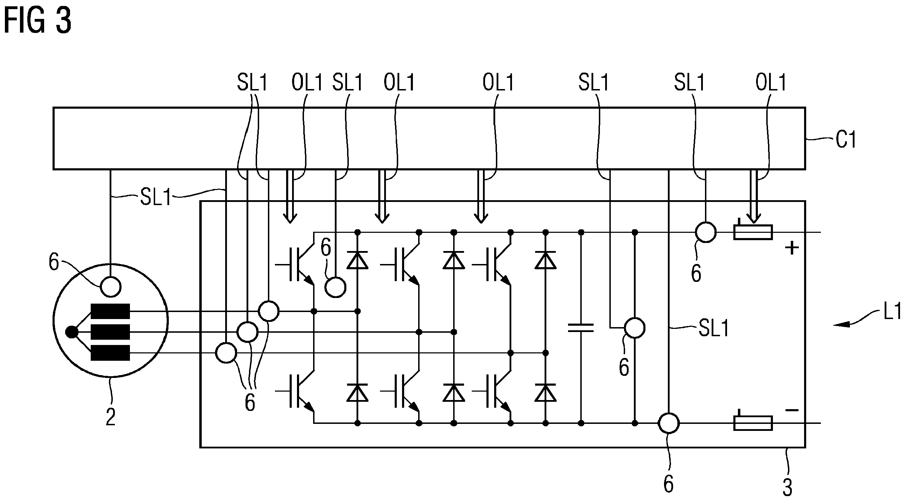

FIG. 3 shows one lane, the first lane L1, of an electrical motor drive as an example for an electrical power train. A first control unit C1 is connected to an inverter 3 which powers a multi-phase electrical motor 2 with electrical energy. The inverter 3 comprises power electronic circuits and many sensors 6 measuring for example current, voltage or rotation frequency. The electrical motor 2 comprises a sensor 6 measuring for example the rotation frequency. The first sensor signals SL1 of the inverter 3 are electrically communicating with the first control unit C1. Based on the first sensor signals SL1 the inverter 6 is controlled by the first control unit C1.

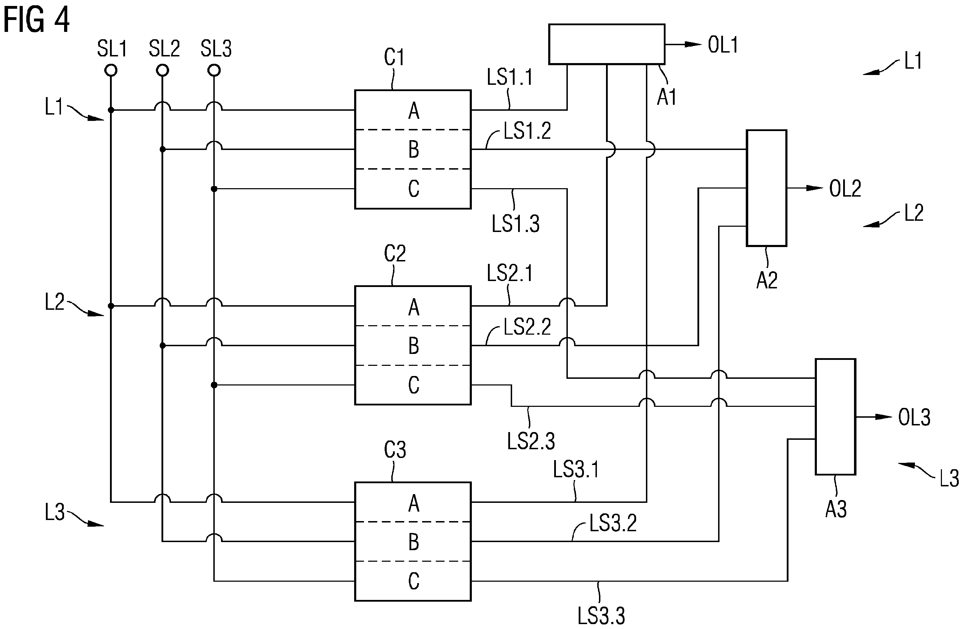

FIG. 4 shows a block diagram of a redundant controller arrangement for an electrical powertrain, here as an example a three-lane motor drivetrain, according to the invention.

The first lane L1 comprises a first control unit C1 and a first output unit A1. A first sensor signal SL1 from sensors of the first lane L1, e.g. from a first-lane specific power inverter, is electrically communicating with a first-lane specific control module A of the first control unit C1. The control module A is responsible for processing the first sensor signal SL1. In addition, a second sensor signal SL2 from sensors of the second lane L2, e.g. from a second-lane specific power inverter, is electrically communicating with a second-lane specific control module B of the first control unit C1. The control module B is responsible for processing the second sensor signal SL2. Furthermore, a third sensor signal SL3 from sensors of the third lane L3, e.g. from a third-lane specific power inverter, is electrically communicating with a third-lane specific control module C of the first control unit C1. The control module C is responsible for processing the third sensor signal SL3.

The embodiment of FIG. 4 shows that the same sensor signal SL1 is used to be processed in the control modules A of the control units C1, C2 and C3. In safety critical applications complete independent sensor measurements may be required. In this case, instead of a single sensor three different sensors are implemented which feed separately the controll module A of the control units C1, C2 and C3.

The control module A of the first control unit C1 is outputting a first-lane specific controller output signal LS1.1. Furthermore, the control module B of the first control unit C1 is outputting a second-lane specific controller output signal LS1.2. Finally, the control module C of the first control unit C1 is outputting a third-lane specific controller output signal LS1.3.

The second lane L2 comprises a second control unit C2 and a second output unit A2. The first sensor signal SL1 from sensors of the first lane L1 is electrically communicating with a first-lane specific control module A of the second control unit C2. The control module A is responsible for processing the first sensor signal SL1. In addition, the second sensor signal SL2 from sensors of the second lane L2 is electrically communicating with a second-lane specific control module B of the second control unit C2. The control module B is responsible for processing the second sensor signal SL2. Furthermore, the third sensor signal SL3 from sensors of the third lane L3 is electrically communicating with a third-lane specific control module C of the second control unit C2. The control module C is responsible for processing the third sensor signal SL3.

The control module A of the second control unit C2 is outputting a first-lane specific controller output signal LS2.1. Furthermore, the control module B of the second control unit C2 is outputting a second-lane specific controller output signal LS2.2. Finally, the control module C of the second control unit C2 is outputting a third-lane specific controller output signal LS2.3.

The third lane L3 comprises a third control unit C3 and a third output unit A3. The first sensor signal SL1 from sensors of the first lane L1 is electrically communicating with a first-lane specific control module A of the third control unit C3. The control module A is responsible for processing the first sensor signal SL1. In addition, the second sensor signal SL2 from sensors of the second lane L2 is electrically communicating with a second-lane specific control module B of the third control unit C3. The control module B is responsible for processing the second sensor signal SL2. Furthermore, the third sensor signal SL3 from sensors of the third lane L3 is electrically communicating with a third-lane specific control module C of the third control unit C3. The control module C is responsible for processing the third sensor signal SL3.

The control module A of the third control unit C3 is outputting a first-lane specific controller output signal LS3.1. Furthermore, the control module B of the third control unit C3 is outputting a second-lane specific controller output signal LS3.2. Finally, the control module C of the third control unit C3 is outputting a third-lane specific controller output signal LS3.3.

All first-lane specific controller output signals LS1.1, LS2.1 and LS3.1 are electrically communicating with the first output unit A1 of the first lane L1. In the first output unit A1 an agreement or decision is made about the first common output signal OL1 for controlling the first lane L1 based on the first-lane specific controller output signals LS1.1, Ls2.1 and LS3.1. For performing this task, the first output unit A1 can be for example a switching circuit or a voter circuit.

All second-lane specific controller output signals LS1.2, LS2.2 and LS3.2 are electrically communicating with the second output unit A2. In the second output unit A2 an agreement or decision is made about the second common output signal OL2 for controlling the second lane L2 based on the second-lane specific controller output signals LS1.2, LS2.2 and LS3.2. For performing this task, the second output unit A2 can be for example a switching circuit or a voter circuit.

All third-lane specific controller output signals LS1.3, LS2.3 and LS3.3 are electrically communicating with the third output unit A3. In the third output unit A3 an agreement or decision is made about the third common output signal OL3 for controlling the third lane L3 based on the third-lane specific controller output signals LS1.3, Ls2.3 and LS3.3. For performing this task, the third output unit A3 can be for example a switching circuit or a voter circuit.

With this design of three control units C1, C2 and C3 each comprising control modules A, B and C a robust redundant control for an electrical powertrain can be guaranteed.

In other words, all control module A functions are allocated to the first lane L1, all control module B functions are allocated to the second lane L2 and all control module C functions are allocated to the third lane L3. In this way, the control modules A, B and C are integrated into each single control unit C1, C2 and C3. For reasons of dissimilarity the control modules A, B and C in different control units C1, C2, C3 can be implemented with different technology and with a different software to further improve the reliability.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: gear
- 2: electrical motor
- 3: power inverter
- 4: control unit
- 5: mechanical shaft
- 6: sensor
- A, B, C: control module
- A1: first output unit
- A2: second output unit
- A3: third output unit
- C1: first control unit
- C2: second control unit
- C3: third control unit
- L1: first lane
- L2: second lane
- L3: third lane
- LS1.1: first-lane specific controller output signal of the first control unit C1
- LS1.2: second-lane specific controller output signal of the first control unit C1
- LS1.3: third-lane specific controller output signal of the first control unit C1
- LS2.1: first-lane specific controller output signal of the second control unit C2
- LS2.2: second-lane specific controller output signal of the second control unit C1
- LS2.3: third-lane specific controller output signal of the second control unit C2
- LS3.1: first-lane specific controller output signal of the third control unit C3
- LS3.2: second-lane specific controller output signal of the third control unit C3
- LS3.3: third-lane specific controller output signal of the third control unit C3
- OL1: first common output signal for the first lane L1
- OL2: second common output signal for the second lane L2
- OL3: third common output signal for the third lane L3
- SL1: first sensor signal
- SL2: second sensor signal
- SL3: third sensor signal

## Claims

1. A system for controlling a multi-lane electrical powertrain, comprising:
- a control unit (C1, C2, C3) for each lane (L1, L2, L3),
- at least one lane-specific sensor signal (SL1, SL2, SL3) for each lane (L1, L2, L3),
- wherein all lane-specific sensor signals (SL1, SL2, SL3) are in electrical communication with all control units (C1, C2, C3) and
- wherein each control unit (C1, C2, C3) is configured to generate lane-specific controller output signals (LS1.1, LS1.2, LS1.3, LS2.1, LS2.2, LS2.3, LS3.1, LS3.2, LS3.3) for each lane (L1, L2, L3) based on the respective lane-specific sensor signals (SL1, SL2, SL3).

2. The system of claim 1, comprising:
- an output unit (A1, A2, A3) for each lane (L1, L2, L3),
- wherein respective lane-specific controller output signals (LS1.1, LS1.2, LS1.3, LS2.1, LS2.2, LS2.3, LS3.1, LS3.2, LS3.3) are electrically communicating with the respective lane-specific output unit (A1, A2, A3), and
- wherein each output unit (A1, A2, A3) is configured to determine a lane-specific common output signal (OL1, OL2, OL3) based on the respective lane-specific controller output signals (LS1.1, LS1.2, LS1.3, LS2.1, LS2.2, LS2.3, LS3.1, LS3.2, LS3.3).

3. The system of claim 2, wherein each output unit (A1, A2, A3) is configured to determinate the lane-specific common output signal (OL1, OL2, OL3) by majority voting or mutual agreement.

4. The system of claim 2 or 3, wherein the output unit (A1, A2, A3) is designed as a voter circuit or a switching circuit.

5. The system of one of the previous claims, comprising:
- a power inverter (3) for each lane (L1, L2, L3),
- wherein the power inverter (3) is at least partly controlled by the common output signals (OL1, OL2, OL3) and
- wherein the sensor signals (SL1, SL2, SL3) are partly generated by the power inverter (3).

6. The system of claim 5, comprising:
- an electrical machine (2), which is electrically connected with the power inverter (3),
- wherein the sensor signals (SL1, SL2, SL3) are partly generated by the electrical machine (2).

7. The system of claim 6,
wherein the electrical machine (2) is a multi-lane multi-phase electrical motor.

8. A method for controlling a multi-lane electrical powertrain, wherein:
- lane-specific sensor signals (SL1, SL2, SL3) are electrically communicating with lane-specific control units (C1, C2, C3) and
- lane-specific controller output signals (LS1.1, LS1.2, LS1.3, LS2.1, LS2.2, LS2.3, LS3.1, LS3.2, LS3.3) are generated by each control unit (C1, C2, C3) for each lane (L1, L2, L3) based on the respective lane-specific sensor signals (SL1, SL2, SL3).

9. The method of claim 8,
- wherein respective lane-specific controller output signals (LS1.1, LS1.2, LS1.3, LS2.1, LS2.2, LS2.3, LS3.1, LS3.2, LS3.3) are electrically communicating with lane-specific output units (A1, A2, A3), and
- wherein a lane-specific common output signal (OL1, OL2, OL3) is determined by each output unit (A1, A2, A3) based on the respective lane-specific controller output signals (LS1.1, LS1.2, LS1.3, LS2.1, LS2.2, LS2.3, LS3.1, LS3.2, LS3.3).

10. The method of claim 9,
wherein the determination of the lane-specific common output signal (OL1, OL2, OL3) is performed by majority voting or mutual agreement.

11. The method of one of claim 8 to 10, wherein:
- a lane-specific power inverter (3) is at least partly controlled by the common output signals (OL1, OL2, OL3) and
- the sensor signals (SL1, SL2, SL3) are partly generated by the power inverter (3).

12. The method of claim 11, wherein:
- an electrical machine (2) is electrically connected with the power inverter (3) and
- the sensor signals (SL1, SL2, SL3) are partly generated by the electrical machine (2).
